# EUROPEAN PATENT SPECIFICATION

(11) **EP 3 044 097 B1**
(45) Date of publication and mention of the grant of the patent: **17.01.2018**
(21) Application number: 14777910.2
(22) Date of filing: 12.09.2014
(51) Int. Cl.: B65B 23/06, A01K 45/00, B65B 23/08, B65G 47/90

(54) **DEVICE FOR THE MANIPULATION OF EGGS**
VORRICHTUNG ZUM HANDHABEN VON EIERN
DISPOSITIF DE MANIPULATION D'OEUFS

(30) Priority: 12.09.2013 NL 2011438
(43) Date of publication of application: 20.07.2016
(73) Proprietor: Viscon B.V., 3295 KH 'S-Gravendeel (NL)
(72) Inventor: DE GEUS, Fred, NL-3295 KH 's-Gravendeel (NL)
(74) Representative: Grootscholten, Johannes A.M.
(86) International application number: PCT/NL2014/050629
(87) International publication number: WO 2015/037995

(56) References cited:
- EP-A1- 0 468 589
- EP-A2- 0 251 750
- US-A- 2 177 595
- US-A- 2 792 253
- US-A- 4 247 241
- US-A- 5 101 954

## Description

The present invention relates to a device for manipulation of eggs, particularly (though not exclusively) removal of eggs from an egg drawer, container or crate, comprising at least a gripper.

Such devices, and more particularly grippers thereof, are generally known. Some grippers are embodied as cups based on vacuum.

Such cups are intended, and have always been intended, to prevent damage to eggs. This is because eggs can be carefully picked up, manipulated, displaced, turned over and so on by placing cups on eggs and applying a vacuum in the cups. Although the known art can function well per se in many respects and under many conditions, this is however certainly not the case for all procedures, methods and conditions, wherein great problems can unintentionally be caused with the known art.

In order to obviate such problems a device according to the known art from US-2177595 comprises at least one gripper which is configured to grip the egg and which comprises at least two legs, these legs being designed to grip round the egg. A device comprising a gripper comprising at least two legs is also for instance described in EP 0468589 A1, US 5101954 and US 2792253.

The use of a vacuum can be avoided in such a device. Particularly in conditions in which a hole is deliberately made in an egg, for instance in order to inject the egg or extract material therefrom for the purpose of determining the gender or detecting bacteria, viruses and the like, creating a vacuum in a cup can cause considerable quantities of material to be unintentionally removed from the inside of the egg, while the sole purpose of the cup and the vacuum applied therein comprises transport or other manipulation of the egg. It is known in the art to seal such deliberately arranged holes or openings in eggs using for instance a resin, plastic or other layer which is arranged substantially on or over the outer surface of an egg with a hole or opening. It has however been found that such sealing means are also not impervious to the vacuum created in a cup, and material from the inside of an egg can unintentionally be extracted therefrom. With a prior art device which has the above stated features a method and device for manipulating, lifting, displacing or even turning over eggs can be provided with the same precision and a perhaps even smaller chance of breakage or damage to an egg.

In determined configurations of trays, egg drawers, containers or crates in which the eggs are supplied the gripper according to the known art is however not dimensioned to engage the eggs in a situation where they are accommodated in these trays, egg drawers, containers or crates.

For the purpose of reducing or obviating these problems a device according to the present invention is disclosed in claim 1.

The present invention has many possible embodiments, wherein reference will be made herein below to several of such embodiments on the basis of the dependent claims, while the description following thereafter likewise relates only to selected embodiments, wherein the present invention is not limited to any of the features according to the dependent claims, nor to features of specific embodiments to be described and as shown in the accompanying drawings. It is noted here that reference may be made above and below to an egg drawer, a container and/or a crate, which can be understood to mean any of these three embodiments, without being limited to a specifically stated embodiment.

In a possible embodiment according to the present invention the device has the features of: an egg processing station, such as an injecting station as point of departure for the egg drawer, container or crate with injected eggs or a measuring station for determining properties of individual eggs, such as a heart rate measurement, and a conveyor configured for transport of the crates from the egg processing station to the gripper. In such an embodiment and in the description following hereafter of specific embodiments a device is thus particularly elucidated which comprises an injecting station and which on the basis thereof is particularly susceptible to the problems of the known art, which are obviated with the configuration of the gripper according to the present invention. It is noted here that the invention can likewise be realized in other configurations, such as with another type of processing station for eggs, such as a measuring station for determining a heart rate of an embryo in an egg, or a random other type of processing station.

In an additional or alternative embodiment according to the present invention the device further has the features that the at least two legs are movable away from and toward each other. This is a simple and elegant embodiment of the present invention, which also comprises configurations with two, three, four or even more legs. Because the legs of the gripper are able to engage by gripping round the egg, a uniform distribution of force exerted on an egg by the gripper can be realized over the outer surface of the egg, and possible pressure or force on the outer surface of the egg can be uniformly distributed in effective and elegant manner in order to thus prevent possible damage or even breakage of a shell of the egg. Eggs can be picked up loosely here in the gripper or be clamped under (preferably light, but owing to the uniform distribution optionally even quite considerable) pressure between the legs of the gripper. The mobility of the legs relative to each other makes it possible to realize an opened position as well as a closed position in which an egg is engaged or an optional and thus not required clamping position. A control can preferably be provided for this purpose, this in any embodiment, several possibilities of which are discussed here only by way of example.

In a further special feature of such an embodiment with legs movable away from and toward each other this embodiment can have the further features that the legs are manufactured from elastically bendable material and are configured to move apart for the purpose of gripping or releasing an egg, and lie close-fittingly against the egg in a situation where they grip the egg. A control or other means for controlling the operation of the gripper need therefore only bring about opening of the legs, wherein the elastic properties of the material from which the legs are manufactured result in the legs of the gripper closing around an egg for picking up.

In addition or as alternative to the elastic properties of the legs, the device according to the present invention with legs movable away from, toward and below each other can further have the feature of a spreader which acts on at least one of the at least two legs of the gripper in order to selectively open and/or close the gripper. The spreader can be an actively driven component exerting force on the legs, the operation of which can be controlled by a control, or conversely a passive component which is only moved reciprocally relative to the legs of the gripper or relative to which the legs of the gripper are displaced or moved in order to realize and/or to control the opened and/or the closed position of the legs of the gripper in co-action with the spreader.

In addition or as alternative to the elastic properties of the legs and/or to the spreader, the device according to the present invention with legs mutually movable away from, toward and below each other can further have the feature that the legs of the gripper are arranged on a suspension, are elongate, extend from the suspension to the pusher and comprise curvatures corresponding to peripheral shapes of eggs. In such an embodiment the suspension can be displaced reciprocally to the spreader or at least relative to the pusher. The legs are preferably elongate in order to be able to pick up eggs in a reciprocal movement performed substantially in a longitudinal direction of the eggs, after they have been pushed up from the crate or other accommodation by the pusher. In such an embodiment the device can further have the feature that the curvatures of the legs of the gripper each correspond to the form of substantially a question mark. The arc of the shape of a question mark can here form a part of the legs which has a shape corresponding to the peripheral shape of eggs. The straight part of a question mark can extend from the curved part to the suspension.

In an embodiment a device according to the invention with elastic legs, which can lie close-fittingly against the egg, and a spreader acting on at least one of the legs of the gripper, and with at least a suspension, in the case of an elongate shape of the legs, with a curvature corresponding to peripheral shapes of eggs and optionally in the form of a question mark, can further have the feature that the spreader comprises a contact block which abuts against at least one of the legs of the gripper and is displaceable along and against them, and is arranged between the pusher and the suspension, wherein the suspension and the contact block are disposed movably away from and/or toward each other. An exceptionally simple and elegant embodiment is thus provided which is particularly effective and efficient.

In an embodiment the device preferably further comprises at least one array of grippers and at least one array of pushers, wherein the spreader comprises at least one array of contact blocks for simultaneously opening or closing the array of grippers. Whole arrays of eggs can thus be pushed up and picked up simultaneously, possibly the same number of eggs as the number of eggs in a crate.

In an embodiment with the pusher according to the present invention the device further has the features of: a control configured to coordinate at least one of: at least an upward pushing movement and a subsequent retracting movement of the pusher; and gripping the upward pushed egg with the gripper. It is noted in the context of these features that the upward pushing movement and the subsequent retracting movement of the pusher is defined relative to the egg drawer, container or crate and that these movements can be realized by moving the crate up and downward instead of the pusher. In such a configuration it is possible for the gripper to be reciprocally movable relative to the pusher apparently disposed in stationary manner. The control can be configured to drive individual pushers - if provided - and/or individual grippers subject to properties of the individual eggs to be determined using detectors, such as life in the egg, fertility thereof or a detected gender thereof. A selection can thus be realized in respect of individual eggs, which may or may not pass into the succession of treatments or processes following a station with the gripper(s).

In an additional or alternative embodiment according to the present invention the number of eggs to be simultaneously processed, manipulated, picked up or otherwise treated can possibly be made equal to the number of eggs accommodated in a crate, wherein the device has the features of: a number of grippers and a number of pushers, wherein at least the same number of combinations, each of a pusher and a gripper, are provided as the number of receiving locations, each for accommodating at least one of the eggs in the crate.

In an additional or alternative embodiment according to the present invention the device further has the features that the pusher comprises a base for supporting an egg and at least two arms movable reciprocally along the base for the purpose of aligning an egg accommodated on the base. The complementary shape of the gripper in association with the pusher described for other purposes in the as yet unpublished international patent application form a crux of the present invention. In such an invention the device can further have the feature that the legs of the gripper and the arms of the pusher have an at least similar form and are elongate, and extend substantially in parallel directions, wherein a combination of the arms of the pusher and the legs of the gripper is distributed substantially uniformly in a radial direction round a line connecting the suspension and the base. A true combination with a functionally reinforcing effect is in this way realized between the pusher and the gripper. Such an embodiment of the device can have the still further feature that the number of legs of the gripper and the number of arms of the pusher are substantially equal. This contributes toward a simple and elegant actuation or control of the gripper and the pusher relative to each other, and a maximal grip on an egg at the stage of treatment, processing or manipulation where both the pusher and the gripper have hold of the egg.

After the foregoing identification of core aspects of the device according to the present invention, as well as preferred though not limitative features thereof, always in more generic terms and expressions, a description of a specific example of an embodiment of a device according to the present invention can follow. Such an example is shown in the accompanying drawing, which shows an embodiment wherein the same or similar elements, components and/or aspects can be designated with the same reference numeral, and in which:
Figure 1 is a schematic and perspective view of a device according to the present invention together with a transport crate;
Figures 2-4 show diverse operational modes of selected elements and components of the configuration of figure 1;
Figure 5 is a schematic side view of a use of a carrier template as an alternative or addition to a pusher, in a first situation of use; and
Figure 6 is a schematic side view of use of the carrier template in figure 5 in a second situation of use.

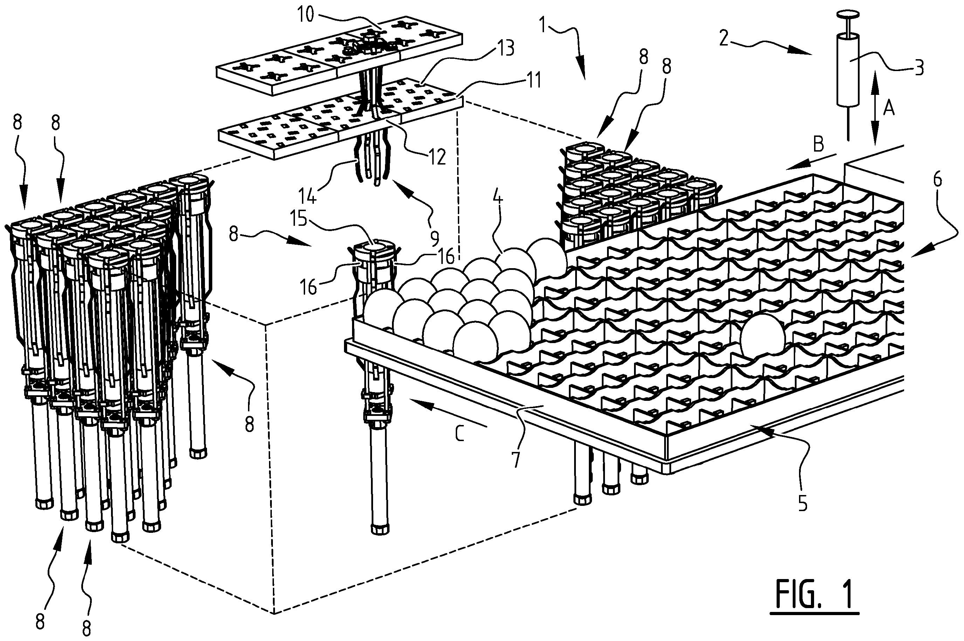

A device 1 according to the present invention is shown schematically in figure 1. Device 1 comprises a schematically shown injecting station 2 with injectors 3, only a single one of which is shown, which are movable up and downward in the direction of double arrow A in order to administer preferably a vaccine or nutrients and/or possibly antibiotics, liquid or the like, or to extract material from the inside of an egg 4. Eggs 4 are accommodated here in a crate 5. Such a crate 5 need not necessarily comprise a bottom and comprises at least a lattice 6 enclosed by a frame edge 7. In the case of an open embodiment of the bottom of crate 5 pushers 8 to be further described hereinbelow can protrude through passages in lattice 6 in order to push eggs 4 up out of crate 5.

Following treatment of eggs 4 at injecting station 2 crate 5 is removed from injecting station 2 in the direction of arrow B and/or arrow C and carried to an arrangement of an assembly of a number of pushers 8.

Pushers 8 are disposed in a number of rows or arrays and crate 5 is carried over pushers 8 in the direction of arrow C in order to position eggs 4 in crate 5 between pushers 8 and in each case an associated gripper 9. Each gripper 9, only a single one of which is shown in the figure, comprises four legs 14. Each of the legs 14 or a selection of the legs 14 can be manufactured from an elastically bendable material which can give way or wherein legs 14 can be pressed apart, for instance using a spreader 11 to be further described hereinbelow, and can then once again take on the original form as shown in figure 1. It is thus possible that gripper 9 can be pressed over an egg, wherein optionally prior hereto legs 14 can be pressed apart using spreader 11.

An assembly of grippers 9 can be arranged on a single suspension 10, or grippers 9 can each be arranged on a separate suspension 10. In the embodiment in the accompanying figures a spreader 11 is also shown in an assembly with suspension 10. Such a spreader 11 comprises a plate-like element 12 with slotted openings or passages 13. Legs 14 of gripper 9 protrude through the slotted openings or passages 13.

Legs 14 of gripper 9 are elongate and have substantially the form of an inverted question mark ¿, of which a straight part is arranged on suspension 10 and a curved part with a form corresponding to the outer periphery of an egg is oriented downward in figure 1 for the purpose of receiving an egg 4 therein. It is possible, particularly in combination with the elongate legs 14 in the form of an inverted question mark and the slotted holes or openings in plate 12 of spreader 11, to realize that legs 14 of gripper 9 are pressed apart when spreader 11 is displaced upward.

A part of a plate 12, which is enclosed by openings or holes 13 associated with a single gripper 9, can be designated a contact block in the sense of the present invention; legs 14 of gripper 9 can hereby be moved away from and/or toward and against each other in order to open and/or close gripper 9, particularly on the basis of the resilient or elastic properties of the material of the legs. In an alternative or additional embodiment it is possible for each of the legs of a gripper to be driven using a drive in order to open and/or close the gripper.

All displacements and movements can be controlled by a control (not shown in detail) such as a microcomputer or another programmable embodiment. Manual operation cannot be precluded as possible embodiment of a device according to the present invention.

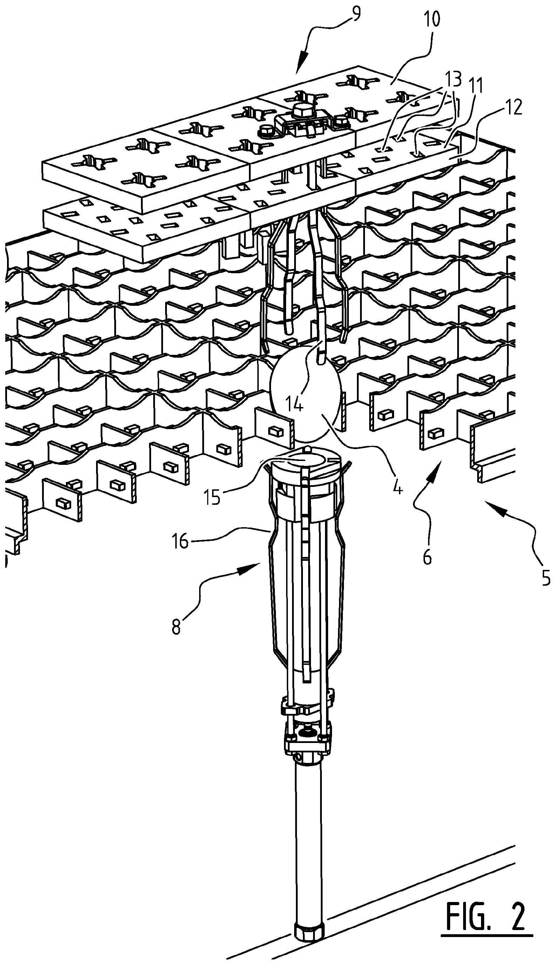

Crate 5 with eggs 4 therein comprises the lattice 6 which has openings on the underside. Already noted above is that pushers 8 can be inserted through these openings on the underside of crate 5. The pushers 8 shown in the figures comprise a base 15 for supporting an egg and at least two arms 16 movable reciprocally along the base for the purpose of aligning an egg 4 accommodated on the base. It is in this way possible to realize that eggs 4 pushed up out of crate 5, which have a longitudinal axis and can thus be displaced upright from crate 5 using pushers 8, can be presented in vertical position to grippers 9 for further displacement, manipulation, processing and so on of eggs 4. This will be further elucidated on the basis of the following description of the accompanying figures 2-4.

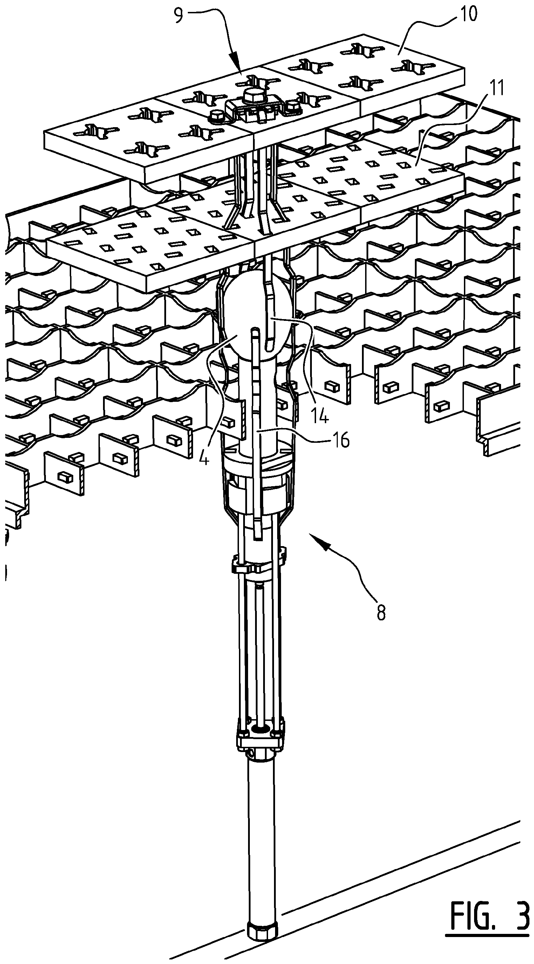

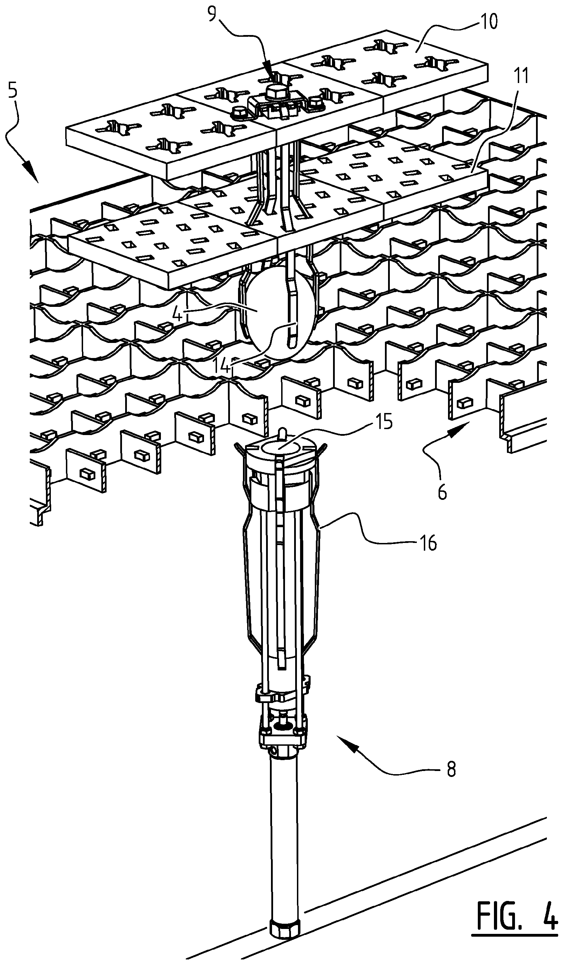

Figure 2 shows the situation of a single egg 4 in a lattice 6 of a crate 5 after completion of the displacement along arrow C in figure 1. In the situation shown in figure 2 the single egg 4 shown in figure 2 lies between pusher 8 and gripper 9. Pusher 8 is then activated in order to move from the situation in figure 2 to the situation in figure 3. Base 15 of pusher 8 here comes to lie under the rounded end of egg 4 and arms 16 of pusher 8 slide along base 15 and around egg 4 in order to place or hold this egg 4 upright on base 15. In this upright position of egg 4, egg 4 is lifted out of lattice 6 of crate 5. Prior hereto or simultaneously plate 12 is displaced upward relative to suspension 10 in order to move legs 14 of gripper 9 into an opened position as shown in figure 2. After or simultaneously with the pushing up of egg 4, the gripper 9 is closed by moving plate 11 away again from suspension 10. The situation shown in figure 3 is thus reached, wherein arms 16 of pusher 8 and legs 14 of gripper 9 as it were clamp round egg 4, and pusher 8 can then be moved back downward again, wherein arms 16 of pusher 8 slide off over the outer surface of egg 4 and egg 4 remains in a situation gripped by gripper 9 as shown in figure 4.

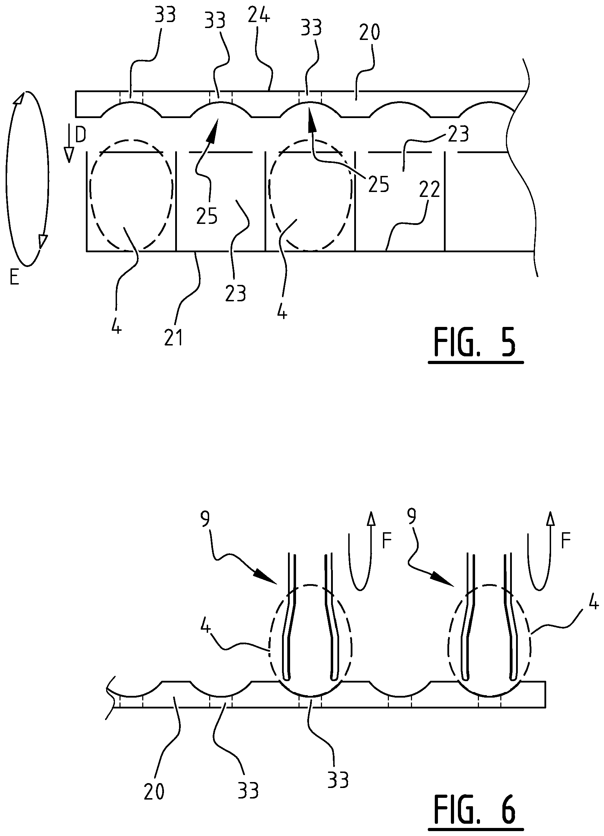

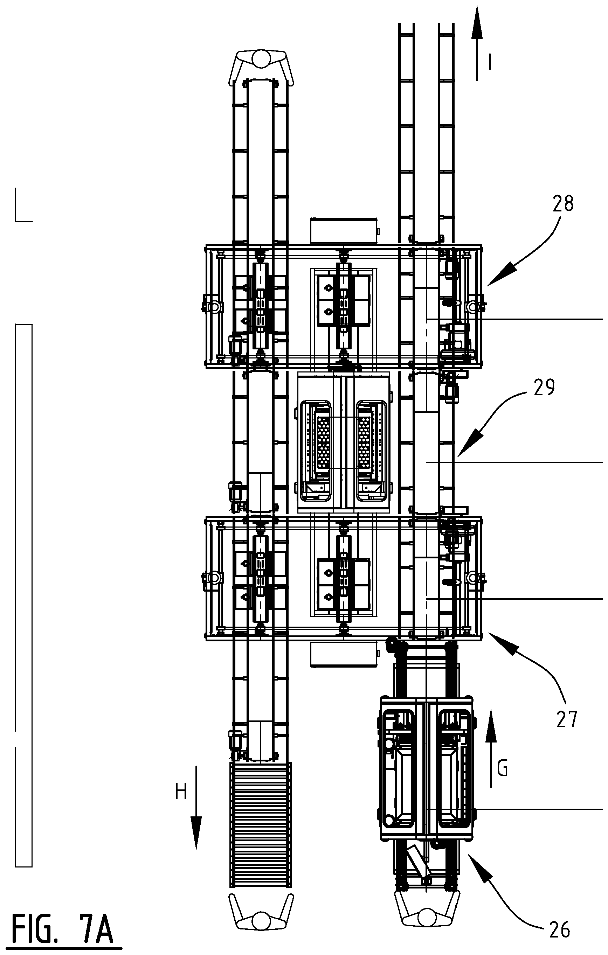

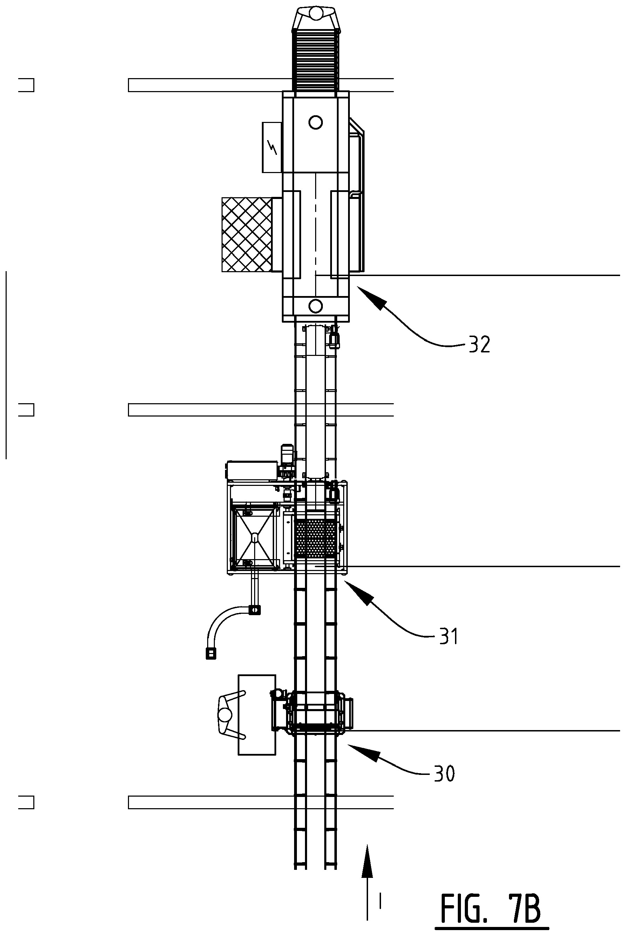

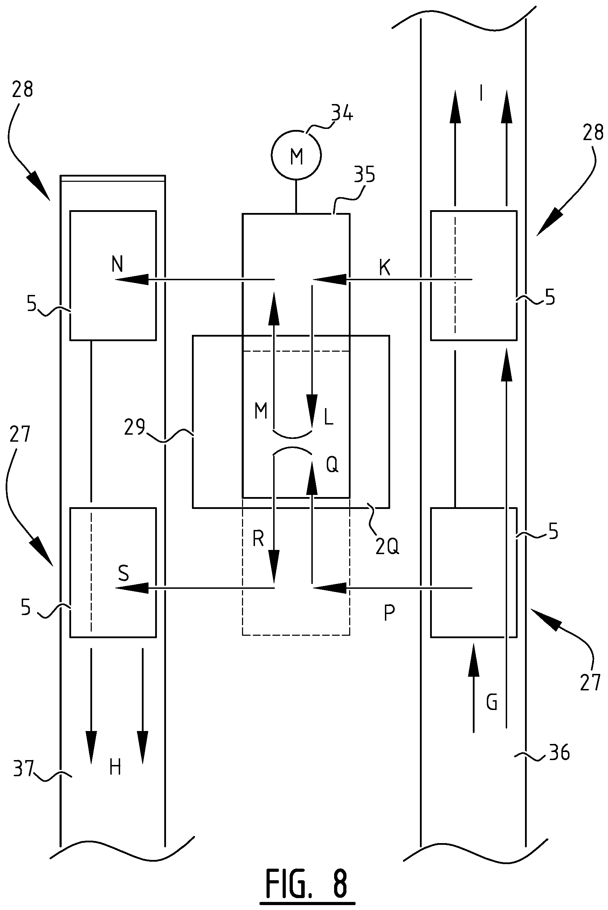

Following below is a description of an alternative method and/or a device based thereon which can by way of example be used for vaccinating eggs, wherein gripper 9 is applied in a different context. The pusher is omitted in this application, although a pusher can also be provided in this embodiment, and a "carrier template" 20 is applied for the eggs, which carrier template allows the gripper to grip round the egg as shown schematically in figure 6. This is particularly useful when the trays, egg drawers, containers or crates 21 in which the eggs are supplied are not dimensioned or embodied for engaging the eggs in a situation where they are accommodated in these trays, egg drawers, containers or crates.

Shown in the view of figure 5 is that a crate 21 is closed on the underside 22 and comprises high compartments 23 for receiving individual eggs therein. In such a configuration of crate 21 a gripper 9 cannot extend into compartments 23 to grip eggs, and a pusher cannot be pushed through the closed bottom 22 of the crate.

In above described embodiments at least one pusher is provided in each case as solution, although this is not very well possible in this embodiment of crate 21. In the embodiment to be described below the stated carrier template 20 is applied. This can be placed in a reversed position as shown in figure 5 in the direction of arrow D onto crate 21 and over the eggs 4 accommodated therein. The assembly of crate 21 and carrier template 20 can then be turned over, this being shown schematically in the form of circular arrow E. Carrier template 20 has a back 24 with which carrier template 20 can be placed on a surface. In an opposite surface the carrier template 20 comprises cup-like recesses 25 which are shaped or curved to correspond to the overall shape of a side of the eggs 4 and in which the eggs come to lie when the assembly of crate 21 and carrier template 20 is turned over in the direction of circular arrow E relative to the situation shown in figure 5. When this reversed position is reached crate 21 can be removed from the carrier template in order to present the eggs standing upright in/on carrier template 20 to grippers 9 in a downward and upward movement as shown schematically with arrow F in figure 6, which shows the situation in which crate 21 has been removed from the reversed carrier template 20.

Both figure 5 and figure 6 show that template 20 is provided at the cup-like recesses 25 with passages 33 which can be dimensioned and embodied for passage of pushers, syringes or for other purposes. This is optionally also realized in any other embodiments with a carrier template.

It is noted that in determined circumstances it may not be desired to reverse the eggs.

Instead of reversal in the direction of circular arrow E, a conveyor can alternatively be applied to displace eggs from a supply crate or tray to a carrier template in the upright position of figure 6.

It will be apparent that diverse additional and alternative embodiments will occur to the skilled person after the foregoing disclosure of details and features of the possible embodiment shown specifically in the figures, to which the present invention is by no means limited. It is thus possible for legs of the gripper to be controlled individually or in combination using an active drive instead of the combination of the spreader and the elastic properties of the legs of the gripper. The injecting station and the displacement of crates with eggs between the injecting station and assemblies of pushers and grippers is optional and serves only to illustrate conditions, functionalities and processes or manipulations wherein cups on the basis of vacuum cannot be used, while the known art provides no alternatives thereto. It is also possible for the control to be configured to control the pusher(s) and/or the gripper(s) and even injectors individually per egg, for instance subject to detection results in respect of life in the egg, fertility of the egg or even of a detected gender of an embryo in the egg. Pushers to be controlled individually can be actuated here so as to selectively present those eggs with desired properties to the grippers for gripping thereof, wherein eggs with less desirable properties can remain behind in the egg drawer, container or crate and can thus be separated from the eggs with more desirable properties, and can even be discharged. It is additionally or alternatively likewise possible for the grippers to be controlled individually to only actually grip a selection of all the eggs presented for gripping when these eggs have the (more) desirable properties. This can thus even be realized without pusher and so for instance with all the eggs in an egg drawer or container or crate.

## Claims

1. Device for manipulation of eggs, particularly removal of eggs (4) from an egg drawer, container or crate (5), at least comprising at least one gripper (9) which is configured to grip the egg (4) and which comprises at least two legs (14), these legs being designed to grip round the egg,
**characterized by**
at least one upward pusher (8) which is configured to push up the at least one of the eggs out of the egg drawer, container or crate (5) with receiving locations for accommodating at least one of the eggs each, wherein the at least one gripper is configured to grip the egg pushed up by the pusher,
wherein the pusher comprises a base (15) for supporting an egg and arms (16) reciprocally movable along the base for aligning an egg accommodated on the base, in such a way that the egg can be displaced upright from the drawer, container or crate (5) using the pusher (8) and can be presented in vertical position to the gripper.

2. The device as claimed in claim 1, further comprising: an egg processing station, such as an injecting station (2) as point of departure for the egg drawer, container or crate with injected eggs or a measuring station for determining properties of individual eggs, such as a heart rate measurement; and a conveyor configured for transport of the crates from the egg processing station to the gripper (9).

3. The device as claimed in claim 1 or 2, wherein at least one of the at least two legs (14) is movable away from and toward the other of the at least two legs.

4. The device as claimed in claim 3, wherein the legs (14) are manufactured from elastically bendable material and are configured to move apart for the purpose of gripping or releasing an egg (4), and lie close-fittingly against the egg in a situation where they grip the egg.

5. The device as claimed in claim 3 or 4, further comprising a spreader (11) which acts on at least one of the at least two legs (14) of the gripper (9) in order to selectively open and/or close the gripper.

6. The device as claimed in claim 3, 4 or 5, wherein the legs (14) of the gripper (9) are arranged on a suspension (10), are elongate, extend from the suspension to the pusher (8) and comprise curvatures corresponding to peripheral shapes of eggs.

7. The device as claimed in claim 6, wherein the curvatures of the legs (14) of the ¹ Page 8, lines 21 - 24.
gripper (9) each correspond to the form of substantially a question mark.

8. The device as claimed in claims 5 and 6 and claim 6 or 7, wherein the spreader (11) comprises a contact block which abuts against at least one of the legs (14) of the gripper (9) and is displaceable along and against them, and is arranged at the suspension (10), wherein the suspension and the contact block are disposed movably away from and/or toward each other.

9. The device as claimed in claim 8, further comprising at least one array of grippers (9) and at least one array of pushers (8), wherein the spreader (11) comprises at least one array of contact blocks for simultaneously opening or closing the array of grippers (9).

10. The device as claimed in any of the foregoing claims, further comprising: a control configured to coordinate at least one of: at least an upward pushing movement and a subsequent retracting movement of the pusher (8); and gripping the upward pushed egg with the gripper (9).

11. The device as claimed in at least one of the foregoing claims, comprising a number of grippers (9) and a number of pushers (8), wherein at least the same number of combinations, each of a pusher (9) and a gripper (8), are provided as the number of receiving locations, each for accommodating at least one of the eggs in the drawer, container or crate.

12. The device as claimed in at least one foregoing claim, wherein the legs (14) of the gripper (9) and the arms (16) of the pusher (8) have an at least similar form and are elongate, and extend substantially in parallel directions, wherein a combination of the arms of the pusher and the legs of the gripper is distributed substantially uniformly in a radial direction round a line connecting the suspension (10) and the base (15).

13. The device as claimed in claim 12, wherein the number of legs (14) of the gripper (9) and the number of arms (16) of the pusher (8) are substantially equal.

## Patentansprüche

1. Vorrichtung zum Handhaben von Eiern, insbesondere zum Entfernen von Eiern (4) aus einer Eierschublade, Schachtel oder Kiste (5), zumindest wenigstens einen Greifer (9) umfassend, der gestaltet ist, das Ei (4) zu greifen, und der wenigstens zwei Schenkel (14) umfasst, wobei diese Schenkel so gestaltet sind, dass sie um das Ei greifen,
**gekennzeichnet durch**
wenigstens einen nach oben beweglichen Schieber (8), der ausgestaltet ist, um wenigstens eines der Eier aus der Eierschublade, Schachtel oder Kiste (5) mit Aufnahmestellen zum Lagern von jeweils mindestens einem der Eier hochzuschieben, wobei der mindestens eine Greifer ausgestaltet ist, um das durch den Schieber hoch geschobene Ei zu greifen,
wobei der Schieber einen Sockel (15) zum Tragen eines Eies und Arme (16) umfasst, der entlang des Sockels hin und her bewegbar ist, um ein auf dem Sockel aufgenommenes Ei derart auszurichten, dass das Ei aus der Eierschublade, Schachtel oder Kiste (5) durch den Schieber (8) aufrecht versetzt und in einer vertikalen Position dem Greifer präsentiert werden kann.

2. Vorrichtung nach Anspruch 1, ferner umfassend:
eine Eierverarbeitungsstation, beispielsweise eine Injektionsstation (2) als Ausgangspunkt für die Eierschublade, Schachtel oder Kiste mit injizierten Eiern oder eine Messstation zur Bestimmung von Eigenschaften einzelner Eier, beispielsweise eine Herzfrequenzmessung; und
ein Förderband, das für den Transport der Kisten von der Eierverarbeitungsstation zu dem Greifer (9) ausgestaltet ist.

3. Vorrichtung nach Anspruch 1 oder 2, wobei mindestens einer der mindestens zwei Schenkel (14) von dem anderen der mindestens zwei Schenkel weg und zu diesem hin bewegbar ist.

4. Vorrichtung nach Anspruch 3, wobei die Schenkel (14) aus elastisch biegbarem Material hergestellt und derart ausgestaltet sind, dass sie sich zum Zweck des Ergreifens oder Freigebens eines Eies (4) auseinander bewegen und in einer Situation, in der sie das Ei greifen, eng anliegend an dem Ei anliegen.

5. Vorrichtung nach Anspruch 3 oder 4, ferner einen Spreizer (11) umfassend, der auf wenigstens einen der mindestens zwei Schenkel (14) des Greifers (9) einwirkt, um den Greifer selektiv zu öffnen und/oder zu schließen.

6. Vorrichtung nach Anspruch 3, 4 oder 5, wobei die Schenkel (14) des Greifers (9) an einer Aufhängung (10) angeordnet sind, länglich sind, sich von der Aufhängung zu dem Schieber (8) erstrecken und Krümmungen aufweisen, die Umfangsformen von Eiern entsprechen.

7. Vorrichtung nach Anspruch 6, wobei die Krümmungen der Schenkel (14) des Greifers (9) jeweils im Wesentlichen der Form eines Fragezeichens entsprechen.

8. Vorrichtung nach den Ansprüchen 5 und 6 und Anspruch 6 oder 7, wobei der Spreizer (11) einen Kontaktblock umfasst, der an mindestens einem der Schenkel (14) des Greifers (9) anliegt und entlang und gegen diesen versetzbar ist, und an der Aufhängung (10) angeordnet ist, wobei die Aufhängung und der Kontaktblock voneinander weg und/oder zueinander hin beweglich angeordnet sind.

9. Vorrichtung nach Anspruch 8, ferner wenigstens eine Anordnung von Greifern (9) und wenigstens eine Anordnung von Schiebern (8) umfassend, wobei der Spreizer (11) wenigstens eine Anordnung von Kontaktblöcken zum gleichzeitigen Öffnen oder Schließen der Anordnung von Greifern (9) umfasst.

10. Vorrichtung nach einem der vorhergehenden Ansprüche, ferner umfassend:
eine Steuerung, die für die Koordination von mindestens einer der folgenden Aktionen ausgestaltet ist:
wenigstens eine Aufwärtsschubbewegung und eine nachfolgende Rückzugsbewegung des Schiebers (8); und
Greifen des nach oben geschobenen Eies mit dem Greifer (9).

11. Vorrichtung nach einem der vorhergehenden Ansprüche, mehrere Greifer (9) und mehrere Schieber (8) umfassend, wobei mindestens die gleiche Anzahl von Kombinationen, je eines Schiebers (8) und eines Greifers (9), wie die Anzahl der Aufnahmestellen, jede zum Aufnehmen von mindestens einem der Eier in der Schublade, Schachtel oder Kiste, bereitgestellt sind.

12. Vorrichtung nach wenigstens einem der vorhergehenden Ansprüche, wobei die Schenkel (14) des Greifers (9) und die Arme (16) des Schiebers (8) eine zumindest ähnliche Form haben und länglich sind und sich im Wesentlichen in parallelen Richtungen erstrecken, wobei eine Kombination der Arme des Schiebers und der Schenkel des Greifers im Wesentlichen gleichmäßig radial um eine Linie, die die Aufhängung (10) und den Sockel (15) verbindet, verteilt ist.

13. Vorrichtung nach Anspruch 12, wobei die Anzahl an Schenkeln (14) des Greifers (9) und die Anzahl an Armen (16) des Schiebers (8) im Wesentlichen gleich sind.

## Revendications

1. Dispositif de manipulation d'oeufs, et en particulier de retrait d'oeufs (4) d'un tiroir, d'un conteneur ou d'une boîte (5) à oeufs, comprenant au moins une pince (9) qui est configurée pour saisir l'oeuf (4) et qui comprend au moins deux pattes (14), ces pattes étant conçues pour serrer le tour de l'oeuf,
**caractérisé en ce que**
au moins un poussoir vers le haut (8) qui est configuré pour pousser au moins l'un des oeufs hors du tiroir, du conteneur ou de la boîte à oeufs (5), avec des emplacements de réception destinés à contenir au moins l'un des oeufs chacun, dans lequel la au moins une pince est configurée pour saisir l'oeuf poussé par le poussoir,
dans lequel le poussoir comprend une base (15) destinée à supporter un oeuf et des bras (16) mobiles de manière réciproque le long de la base afin d'aligner un oeuf contenu sur la base, de sorte que l'oeuf puisse être déplacé verticalement depuis le tiroir, le conteneur ou la boîte (5) à l'aide du poussoir (8) et puisse être présenté en position verticale à la pince.

2. Dispositif selon la revendication 1, comprenant en outre : un poste de traitement d'oeufs, tel qu'un poste d'injection (2) en guise de point de départ pour le tiroir, le conteneur ou la boîte à oeufs, avec des oeufs injectés, ou un poste de mesure destiné à déterminer les propriétés des oeufs individuels, comme la mesure d'une fréquence cardiaque ; et un convoyeur configuré pour transporter les boîtes du poste de traitement d'oeufs vers la pince (9).

3. Dispositif selon la revendication 1 ou 2, dans lequel au moins l'une des deux pattes (14) peut se déplacer à l'écart de et vers l'autre des au moins deux pattes.

4. Dispositif selon la revendication 3, dans lequel les pattes (14) sont fabriquées à partir d'un matériau élastiquement flexible et sont configurées pour s'éloigner l'une de l'autre dans le but de saisir ou de relâcher un oeuf (4), et pour se placer contre l'oeuf lorsqu'elles saisissent l'oeuf.

5. Dispositif selon les revendications 3 ou 4, comprenant en outre un écarteur (11) qui agit sur au moins l'une des au moins deux branches (14) de la pince (9) afin d'ouvrir et/ou de fermer sélectivement la pince.

6. Dispositif selon les revendications 3, 4 ou 5, dans lequel les pattes (14) de la pince (9) sont disposées sur une suspension (10), sont allongées, s'étendent de la suspension vers le poussoir (8) et comprennent des courbures correspondant aux formes périphériques des oeufs.

7. Dispositif selon la revendication 6, dans lequel les courbures des pattes (14) de la pince (9) correspondent chacune essentiellement à la forme d'un point d'interrogation.

8. Dispositif selon les revendications 5 et 6 et la revendication 6 ou 7, dans lequel l'écarteur (11) comprend un bloc de contact qui vient en butée contre au moins l'une des pattes (14) de la pince et est déplaçable le long de et contre celles-ci, et est disposé au niveau de la suspension (10), dans lequel la suspension et le bloc de contact sont disposés de manière mobile à l'écart de et/ou vers l'un et l'autre.

9. Dispositif selon la revendication 8, comprenant en outre au moins un groupe de pinces (9) et au moins un groupe de poussoirs (8), dans lequel l'écarteur (11) comprend au moins un groupe de blocs de contact destinés à ouvrir ou fermer simultanément le groupe de pinces (9).

10. Dispositif selon l'une quelconque des revendications précédentes, comprenant en outre : une commande configurée pour coordonner au moins l'un de : au moins un mouvement de poussée vers le haut et un mouvement de retrait ultérieur du poussoir (8) ; et la saisie de l'oeuf poussé vers le haut avec la pince (9).

11. Dispositif selon l'une quelconque des revendications précédentes, comprenant un nombre de pinces (9) et un nombre de poussoirs (8), dans lequel au moins le même nombre de combinaisons, chacune d'un poussoir (8) et d'une pince (9), est prévu comme nombre d'emplacements de réception, chacun destinés à contenir au moins l'un des oeufs qui se trouve dans le tiroir, le conteneur ou la boîte.

12. Dispositif selon au moins l'une quelconque des revendications précédentes, dans lequel les pattes (14) de la pince (9) et les bras (16) du poussoir (8) ont au moins une forme similaire et sont allongés, et s'étendent sensiblement dans des directions parallèles, dans lequel une combinaison des bras du poussoir et des pattes de la pince répartie de manière sensiblement uniforme dans une direction radiale autour d'une ligne reliant la suspension (10) et la base (15).

13. Dispositif selon la revendication 12, dans lequel le nombre de pattes (14) de la pince (9) et le nombre de bras (16) du poussoir (8) sont sensiblement identiques.
